(19) Europäisches Patentamt
European Patent Office
Office européen des brevets

(11) Veröffentlichungsnummer: **0 242 706 B1**

(12) **EUROPÄISCHE PATENTSCHRIFT**

(45) Veröffentlichungstag der Patentschrift: **10.06.92**

(51) Int. Cl.[5]: **C07F 9/38**

(21) Anmeldenummer: **87105181.9**

(22) Anmeldetag: **08.04.87**

Die Akte enthält technische Angaben, die nach dem Eingang der Anmeldung eingereicht wurden und die nicht in dieser Patentschrift enthalten sind.

# (54) Verfahren zur Herstellung von alpha-Aminoalkylphosphonsäuren.

(30) Priorität: **11.04.86 DE 3612192**

(43) Veröffentlichungstag der Anmeldung: **28.10.87 Patentblatt 87/44**

(45) Bekanntmachung des Hinweises auf die Patenterteilung: **10.06.92 Patentblatt 92/24**

(84) Benannte Vertragsstaaten: **AT BE CH DE ES FR GB IT LI NL SE**

(56) Entgegenhaltungen:

**TETRAHEDRON LETTERS, Nr. 52, 1973, Seiten 5201-5202, Pergamon Press, GB; M. SOROKA et al.: "Hofmann degradation and bromination of amides derived from phosphonoacetic acid"**

**CHEMICAL ABSTRACTS, Band 81, Nr. 11, 16. September 1974, Seite 484, Zusammenfassung Nr. 63728m, Columbus, Ohio, US; J. RACHON et al.: "Aminophosphonic acids. 2. Hofmann degradation of carboxamides. A new method for the preparation of alpha-amino-phosphonic acids", & Z. CHEM. 1974, 14(4), 152-4**

(73) Patentinhaber: **HOECHST AKTIENGESELLSCHAFT**
**Postfach 80 03 20**
**W-6230 Frankfurt am Main 80(DE)**

(72) Erfinder: **Kleiner, Hans-Jerg, Dr.**
**Altkönigstrasse 11a**
**W-6242 Kronberg/Taunus(DE)**
Erfinder: **Bartels, Günter, Dr.**
**Leimenweg 31**
**W-3300 Braunschweig(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft die Herstellung von α-Aminoalkylphosphonsäuren.Die unsubstituierte Aminomethylphosphonsäure der Formel A (siehe Patentanspruch 1) ($R_1$ und X jeweils = H) sowie verschiedene ähnliche phosphorhaltige Verbindungen besitzen biologische - hauptsächlich herbizide - Wirksamkeit; z.T. können die Verbindungen auch zu biologisch aktiven Substanzen weiter verarbeitet werden - vgl. den Artikel von L. Maier "Advances in the Chemistry of Aminophosphinic Acids" in der Zeitschrift "Phosphorus and Sulfur" 1983 Vol. 14, S. 295 - 322, insbesondere 317 - 320. Dieser Artikel beschäftigt sich zwar hauptsächlich - wie schon aus dem Titel hervorgeht - mit Aminophosphin-säuren, doch werden dort auch Aminophosphonsäuren mit behandelt.

Deswegen beschreibt Teil A - Preparation of aminophosphinic acids - auf den Seiten 296 - 315 dieses Artikels nicht nur eine Reihe bekannter Verfahren zur Herstellung von Aminophosphinsäuren, sondern auch verschiedene Methoden zur Herstellung von Aminophosphonsäuren. Nach diesen Verfahren können im Prinzip auch die Verbindungen der Formel A erhalten werden.

Eine in dem genannten Artikel nicht mit aufgeführte Methode ist das in der Arbeit von M. Soroka und P. Mastalerz "Hofmann Degradation and Bromination of Amides derived from Phosphonoacetic Acid" (Tetrahedron Letters No. 52, S. 5201 - 5202, 1973) beschriebene Verfahren zur Herstellung einiger spezieller α-Aminoalkylphosphonsäuren durch Hofmann'schen Abbau und saure Hydrolyse der Ester verschiedener Phosphoncarbonsäureamide.

Durch den Hofmann'schen Abbau können Carbonsäureamide durch Behandlung mit Chlor oder Brom in alkalischem Medium (worin sich die entsprechenden Hypohalogenite bilden) in die um ein C-Atom ärmeren Amine überführt werden (vgl. z.B. Organic Reactions 3 (1946), S. 267ff. "The Hofmann Reaction", insbesondere S. 268); für den Hofmann'schen Abbau wird folgende Reaktionsgleichung angegeben (mit Brom als Halogen und der Bedeutung von R für einen organischen Rest):

$$RCONH_2 + Br_2 + 4OH^- \rightarrow R\text{-}NH_2 + CO_3^{2-} + 2Br^- + 2H_2O$$

Die in der Arbeit von M. Soroka und P. Mastalerz a.a.O. beschriebenen Hofmann'schen Abbaureaktionen können durch folgendes Formelschema wiedergegeben werden:

a) 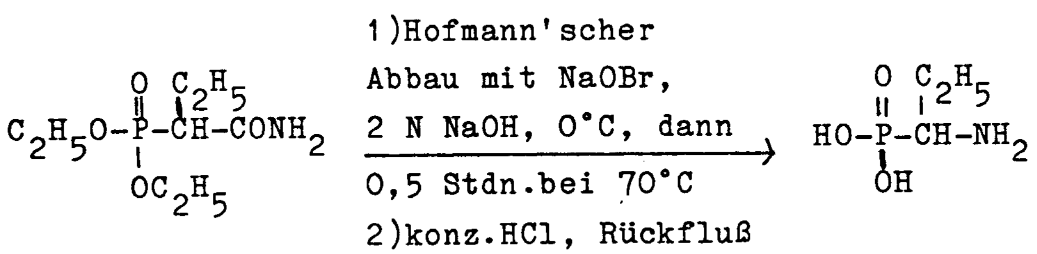


b) 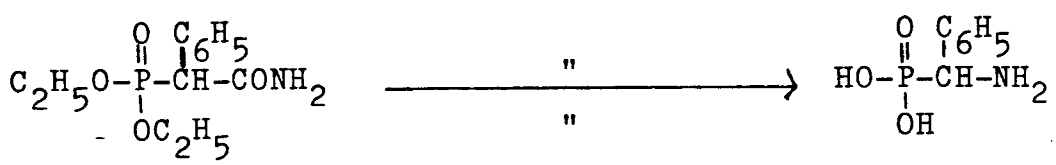


Die Ausbeuten an den entsprechenden α-Aminoalkylphosphonsäuren sollen hier bei 70 bis 80 % d.Th. liegen.

Wenn das mit dem Phosphor verbundene C-Atom nicht oder durch andere Gruppen substituiert ist, sollen unter den Bedingungen des Hofmann'schen Abbaus in erster Linie halogensubstituierte Phosphoncarbonsäurederivate (und praktisch keine halogenfreien Amine) entstehen, wie aus den Formelschemata c), d) und e) ersichtlich ist.

c) 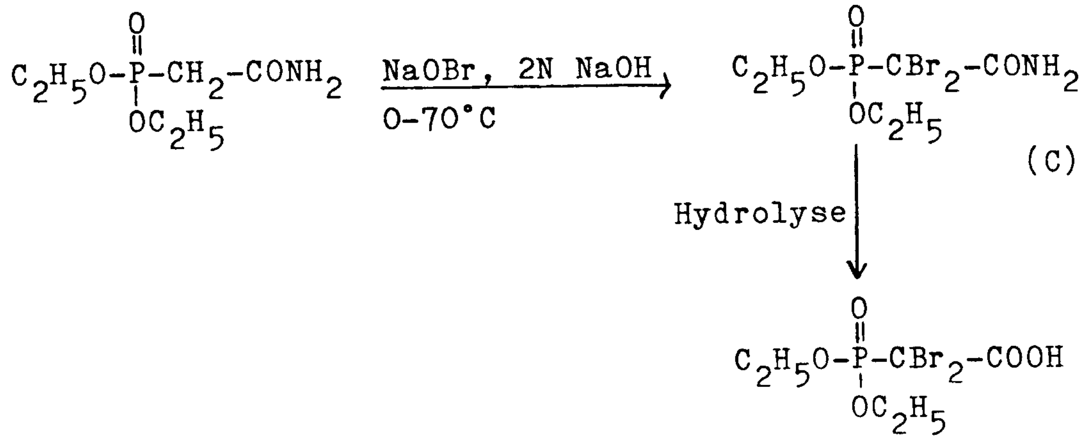


Wenn hier 2 Mol NaOBr anstelle des sonst für den Hofmann'schen Abbau üblichen einen Mols verwendet werden, soll die Ausbeute an der Verbindung Aminocarbonyl-dibrommethyl-phosphonsäurediäthylester C bis zu 75 % betragen.

d) 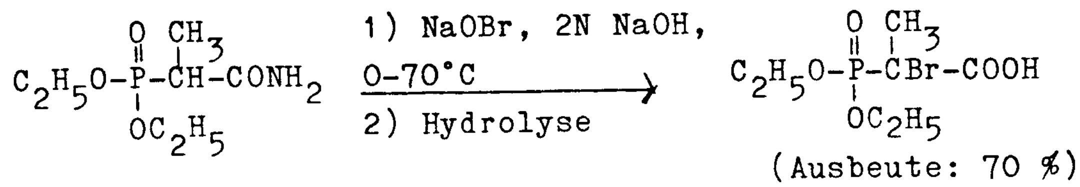


e) 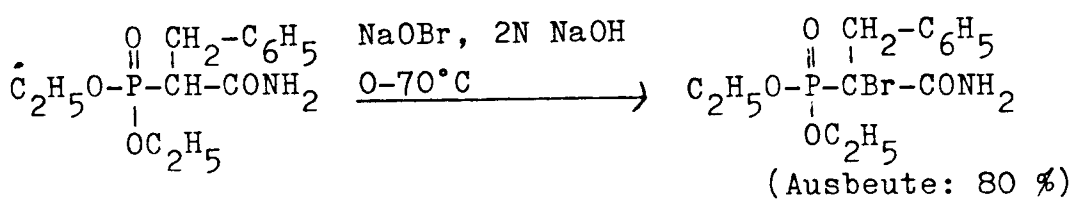


In dem Endprodukt der Reaktion e) läßt sich die $CONH_2$-Gruppe ebenfalls zur Carboxylgruppe hydrolysieren. Bei weitergehender Hydrolyse werden aus dieser Säure ebenso wie aus denen der Reaktionen c) und d) auch die Phosphonestergruppen zu den OH-Gruppen hydrolysiert.

Wie eigene Versuche gezeigt haben, entsteht auch beim Ersatz des NaOBr durch NaOCl bei der vorerwähnten Reaktion c) praktisch kein halogenfreies Amin der Formel A mit $R^1$ = H.

Aus der Veröffentlichung von J. Rachon et al. (Z. Chem. 14 (1974) 152-154; CA 81 (1974) 63728 m ist der Hofmann-Abbau von 2-Diäthoxyphosphoryl-propionamid, -butyramid und -valeramid mit Kaliumhypobromit bekannt. Wie eigene Ver-Versuche gezeigt haben, erhält man bei der Umsetzung der gleichen Verbindungen mit Hypochlorit praktisch keinen Hofmann'schen-Abbau.

In dem Bestreben, die von M. Soroka und P. Mastalerz a.a.O. beschriebenen - vorstehend unter c), d) und e) wiedergegebenen - Reaktionen so abzuwandeln, daß auch dabei die normalen halogenfreien Hofmann'schen Abbauprodukte (α-Aminoalkylphosphonsäuren) in hohen Ausbeuten entstehen, sowie in dem Bestreben, diese Reaktion gegebenenfalls auch noch auf andere ähnliche P-C-Verbindungen zu erweitern, wurde bereits vorgeschlagen, nicht von den Estern der entsprechenden Aminocarbonylalkylphosphonsäuren (M. Soroka und P. Mastalerz a.a.O.!), sondern von den jeweiligen Estersalzen - sowie in der Aminocarbonylalkylphosphinsäurereihe in analoger Weise von Aminocarbonylalkyl-phosphinsäuresalzen - auszugehen (EP-OS 184 753, Stand der Technik nach Artikel 54(3) EPÜ).

Gegenstand des vorerwähnten Schutzrechts ist ein Verfahren zur Herstellung von α-Aminoalkylphosphon- und von α-Aminoalkyl-phosphinsäuren der Formel I

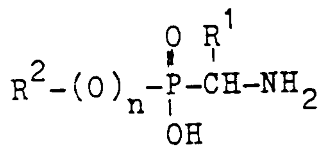 (I),

worin n 1 oder 0, $R^1$ H, $CH_3$ oder $CH_2$-$C_6H_5$, und $R^2$ H (für n = 1) sowie Alkyl oder Phenyl (für n = 0), bedeuten, das dadurch gekennzeichnet ist, daß man Verbindungen der Formel II

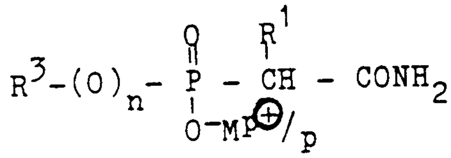 (II),

worin n und $R^1$ die gleiche Bedeutung wie in Formel I besitzen und $R^3$ Alkyl (für n = 1), Alkyl oder Phenyl (für n = 0), und $M^{p\oplus}$ ein p-wertiges Kation, bedeuten, einem Hofmann'schen Abbau unterwirft und die Verbindungen der Formel I in bekannter Weise gewinnt. Dabei werden die α-Aminoalkylphosphon- und α-Aminoalkylphosphinsäuren der Formel I durchweg in Ausbeuten zwischen etwa 70 und 90 % d.Th. erhalten.

In weiterer Bearbeitung dieses Verfahrens wurde nun gefunden, daß man die α-Aminoalkylphosphonsäuren vorteilhaft auch durch Hofmann'schen Abbau der entsprechenden Aminocarbonylalkyl-phosphonsäure-(voll)-salze (anstelle der Estersalze nach dem Verfahren des vorerwähnten Schutzrechts) erhalten kann. Erfindungsgegenstand ist daher ein Verfahren zur Herstellung von α-Aminoalkylphosphonsäuren bzw. deren Salzen der Formel A (s. Patentanspruch 1), worin $R^1$ ,H, Methyl oder $CH_2$-$C_6H_5$ und X H oder ein Metallkation ist, das dadurch gekennzeichnet ist, daß man Salze der Aminocarbonylalkylphosphonsäure der Formel B (s. Patentanspruch 1), worin $R^1$ die gleiche Bedeutung wie in Formel A besitzt und $M^{p\oplus}$ H oder ein p-wertiges Metallkation, vorzugsweise $Na^{\oplus}$ oder $K^{\oplus}$ bedeutet, einem Hofman'schen Abbau unterwirft, d. h. mit einem Hypochlorit, eines p-wertigen Metallkations behandelt wobei, wenn $M^{p\oplus}$ Wasserstoff ist, für eine ausreichende Basizität Sorge getragen wird,und das gebildete Metallsalz isoliert oder das erhaltene Reaktionsgemisch zur Herstellung der α-Aminoalkylphosphonsäure ansäuert. Bevorzugt ist $R^1$ Wasserstoff. Die erfindungsgemäße Reaktion wird zweckmäßig bei Temperaturen zwischen 20 und 90 °C durchgeführt.

In fällen, in denen Salze der Aminocarbonylalkylphosphonsäure der Formel B' (siehe Patentanspruch 2), worin $R^1$ H oder $CH_2$-$C_6H_5$ bedeutet, als Ausgangsmaterialien verwendet werden, betrifft die Erfindung auch den Hoffmann'schen Abbau mit einem Hypobromit eines p-wertigen Mtallkations. Aus den so erhaltenen Salzen lassen sich die α-Amino-alkylphosphonsäuren der Formal A in üblicher Weise gewinnen.

Die Ausbeuten liegen bei dem erfindungsgemäßen Verfahren in der gleichen Größenordnung wie diejenigen gemäß dem Verfahren des vorerwähnten Schutzrechts. Dies ist sehr überraschend, weil man nach M. Soroka und P. Mastalerz sowie nach den vorerwähnten eigenen Versuchen durch Hofmann'schen Abbau und saure Hydrolyse der Verbindungen der Formel B in vollveresterter Form hauptsächlich halogenierte Phosphonsäurederivate und praktisch keine normalen halogenfreien Hofmann-Abbauprodukte (Amine) erhält. Die relativ geringfügige Abänderung der Ausgangsprodukte (Salze anstelle der Ester) ließ den gänzlich anderen - erfindungsgemäßen - Reaktionsverlauf nicht erwarten.

Die Ausgangsprodukte für das erfindungsgemäße Verfahren - d.s. die Aminocarbonylalkglphosphonsäure-salze der Formel B oder B' - konnen nach bekannten Verfahren erhalten werden. Man stellt z.B. durch Umsetzung von Phosphorigsäureestern mit α-Halogencarbonsäureamiden (etwa entsprechend J. Org. Chem. 23, S. 1883 - 1886 (1958)) zuerst die Aminocarbonylalkyl-phosphonsäure-dialkylester her und wandelt diese zweckmäßig mittels Trimethylsilylbromid in die Bis-trimethylsilylester um; letztere sind leicht mit Wasser hydrolysierbar. Die dabei gebildeten Aminocarbonylalkylphosphonsäuren sind dann noch zu neutralisieren. Formelmäßig läßt sich dieses Herstellverfahren wie folgt wiedergeben:

a) 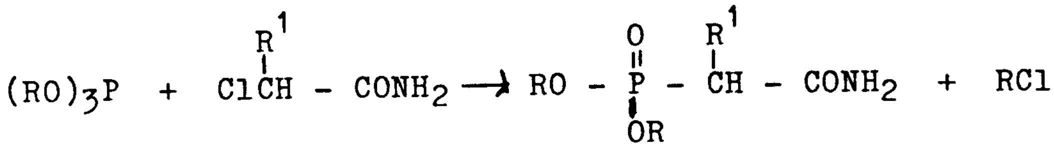

(R = Alkyl)

b) 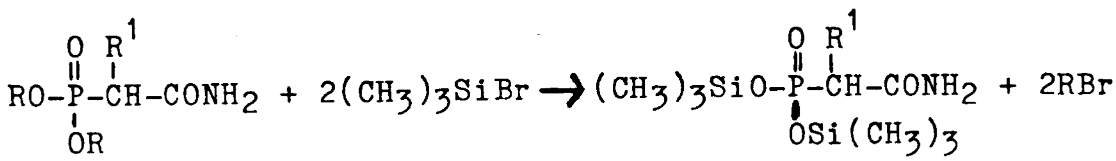

c) 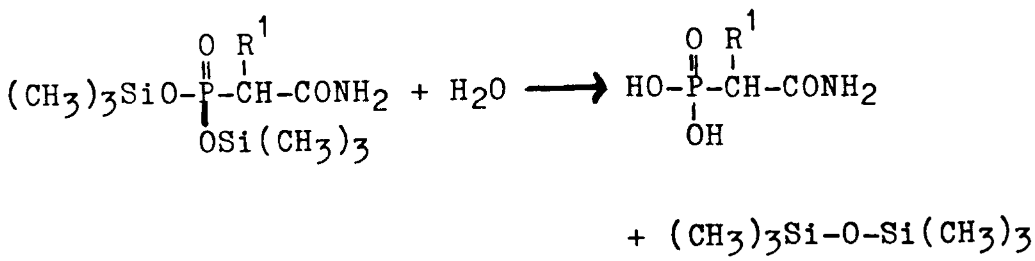

Das Hexamethyl-disiloxan $(CH_3)_3Si\text{-}O\text{-}Si(CH_3)_3$ kann mittels $PBr_3$ wieder in das Trimethylsilylbromid $(CH_3)_3SiBr$ übergeführt werden.

Der Hofmann'sche Abbau der Verbindungen der Formel B wird z. B. mittels Chlor jener der Formel B' mittels Brom und Alkalilauge, insbesondere NaOH oder KOH, durchgeführt, wie dies für diesen Reaktionstyp üblich und bekannt ist. Vorzugsweise geht man dabei so vor, daß man zunächst durch Umsetzung von Chlor oder Brom in einer Alkalihydroxidlösung eine alkalische Hypohalogenit-Lösung herstellt. In diese Lösung wird die Verbindung B oder B' entweder in fester Form oder als wäßrige Lösung, zweckmäßig bei etwa 20 bis 30 ° C, eingetragen. Natürlich ist es auch möglich, etwa die freie Aminocarbonylalkylphosphonsäure oder auch deren Monosalze direkt einzusetzen, sofern nur die Hypohalogenit-Lösung genügend alkalisch ist. Die Salze der Formel B oder B' bilden sich dann in der Lösung. Das Molverhältnis Halogen:Alkalihydroxid:Verbindung B liegt beispielsweise bei etwa (1 bis 1,2):etwa (4 bis 6):etwa 1.

Nach Zugabe der Verbindung B oder B' bzw. der entsprechenden freien Aminocarbonylmethylphosphonsäure wird die Temperatur vorteilhaft bis auf etwa 90 ° C, bevorzugt 40 bis 80 ° C und insbesondere auf etwa 60 bis 75 ° C, erhöht. Besonders ab etwa 50 ° C setzt hier meist eine exotherme Reaktion ein, so daß dann gegebenenfalls gekühlt werden muß.

Die Aufarbeitung der anfallenden Reaktionslösung erfolgt auf übliche Weise. Beispielsweise wird zwecks Freisetzung der -Aminoalkylphosphonsäure (A) oder (4') mit Säuren - z. B. mit Salzsäure - umgesetzt. Dann wird eingedampft und der Hauptteil der anorganischen Salze abgeschieden. Die resultierende Lösung kann gegebenenfalls für weitere Umsetzungen genutzt werden. Es ist auch möglich, die Lösung bis zur Trockne unter vermindertem Druck einzuengen und unter Zuhilfenahme geeigneter Lösungsmittel wie $CH_3OH$, HCOOH, $CH_3COOH$ etc. weitgehend reine Aminoalkylphosphonsäure A oder A' zu gewinnen. Zur weiteren Reinigung kann noch umkristallisiert werden.

Die Erfindung wird nun durch das nachfolgende Beispiel näher erläutert. Nach dem Erfindungsbeispiel folgt noch ein Vergleichsbeispiel, aus dem hervorgeht, daß unter den Bedingungen des Hofmann'schen Abbaus aus Aminocarbonylmethyl-phosphonsäurediäthylester praktisch keine Aminomethanphosphonsäure entsteht.

<u>Beispiel</u>

Aminomethanphosphonsäure

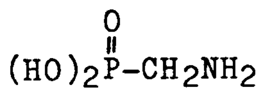

a) Herstellung des Ausgangsproduktes Aminocarbonylmethylphosphonsäure-Na-Salz

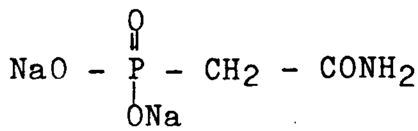

Aminocarbonylmethylphosphonsäure-diäthylester wurde in bekannter Weise nach Arbusow aus Triäthylphosphit und Chloracetamid erhalten.

Der Diäthylester wurde dann mit Trimethylsilylbromid in den Bis-trimethylsilylester überführt. Dazu wurden in eine Lösung von 195 g (1 Mol) Aminocarbonylmethylphosphonsäurediäthylester in 300 g Dichlormethan 306 g (2 Mol) Trimethylsilylbromid eingetropft unter Rühren. Die Temperatur stieg dabei auf 40 ° C an. 5 Stunden wurde nachgerührt, dann im Wasserstrahlvakuum abdestilliert bis zu einer Innentemperatur von 60 ° C. Der Rückstand betrug 283 g Aminocarbonylmethylphosphonsäurebistrimethylsilylester (100 % d.Th. Ausbeute). Das Produkt kristallisierte.

Hydrolyse des Bis-trimethylsilylesters:

283 g (1 Mol) Aminocarbonylmethylphosphonsäurebis-trimethylsilylester wurden auf etwa 70 ° C erwärmt und in so verflüssigter Form bei 20 ° C in 100 ml Wasser unter Rühren und Kühlung getropft. Dann wurde auf 0 ° C gekühlt. Nach beendeter Kristallisation wurde abgesaugt. Man erhielt 118 g Aminocarbonylmethylphosphonsäure. Das Filtrat bestand aus zwei Schichten; die obere wurde abgetrennt (Hexamethyldisiloxan), die untere eingeengt; dabei erhielt man weitere 12 g. Insgesamt wurden 130 g Aminocarbonylmethylphosphonsäure, Schmp. 178 - 180 ° C, erhalten. Das entspricht einer Ausbeute von 93,5 % d.Th.

| $C_2H_6NO_4P$ | | | | | | | | |
|---|---|---|---|---|---|---|---|---|
| MG: 139 | | | | | | | | |
| ber.: | 17,25 % | C | 4,32 % | H | 10,06 % | N | 22,3 % | P |
| gef.: | 17,0 % | C | 4,4 % | H | 9,9 % | N | 22,3 % | P |

Neutralisation der freien Aminocarbonylmethylphosphonsäure:

56 g (0,4 Mol) Aminocarbonylmethylphosphonsäure wurden in Wasser dispergiert. Dazu wurde unter Kühlung konzentrierte Natronlauge getropft, bis eine klare Lösung von pH 6,5 entstanden war. Es wurden 145 g einer derartigen Lösung erhalten.

b) Erfindungsgemäße Umsetzung

In einer bei -5 ° C aus 67,2 g (1,68 Mol) Natriumhydroxid, 29,8 g (0,42 Mol) Chlor und 400 ml Wasser hergestellten Hypochlorit-Lösung wurde bei 30 ° C die - wie vorstehend beschrieben - hergestellte Lösung während 5 Minuten zufließen gelassen. Die Temperatur stieg auf 50 ° C, dann innerhalb einer Minute auf 80 ° C; es wurde gekühlt. Das Reaktionsgemisch wurde nun etwa 30 Minuten bei 70 ° C gehalten. Dann wurde gekühlt und durch Einleiten von Chlorwasserstoff auf pH 2,6 gestellt. Dann wurde fast zur Trockne im Vakuum der Wasserstrahlpumpe eingeengt und der Rückstand mit 100 ml konz. Salzsäure verrührt, abgesaugt und mit konz. Salzsäure nachgespült. Es wurden 124 g Natriumchlorid abgesaugt. Das Filtrat wurde eingeengt, mit Wasser versetzt und erneut zur Trockne eingedampft, zum Schluß im Hochvakuum bei 70 ° C Badtemperatur. Der resultierende Rückstand wurde mit Methanol/Wasser digeriert. Es wurden

insgesamt 31 g Aminomethanphosphonsäure erhalten. Das entspricht einer Ausbeute von 70 % d.Th.

Vergleichsbeispiel

Versuch des Hofmann-Abbaus von Aminocarbonylmethylphosphonsäurediäthylester

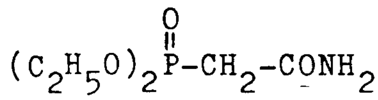

Zu einer bei 0 ° C aus 67,2 g (1,68 mol) Natriumhydroxid, 29,8 g (0,42 mol) Chlor und 400 ml Wasser hergestellten Hypochlorit-Lösung wurden bei Raumtemperatur 78 g (0,4 mol) Aminocarbonylmethylphosphonsäurediäthylester gegeben.

Die sich zunächst ohne Heizung auf 50 ° C erwärmende Reaktionslösung wurde 30 Min. auf 65 ° C erhitzt und nach Abkühlen mit konzentrierter Salzsäure angesäuert. Nach Eindampfen am Rotationsverdampfer wurde mit 150 ml konz. Salzsäure versetzt, das gebildete Kochsalz abfiltriert, das Filtrat 2 Stunden am Rückfluß erhitzt. Nach vollständigem Eindampfen wurde mit 200 ml Methanol und 30 ml Pyridin versetzt. Eine Ausfällung der unter diesen Bedingungen unlöslichen Aminomethanphosphonsäure wurde nicht beobachtet. Darüber hinaus konnten im Dünnschichtchromatogramm nur Spuren von Aminomethanphosphonsäure nachgewiesen werden.

**Patentansprüche**

1. Verfahren zur Herstellung von α-Aminoalkylphosphonsäuren bzw. deren Salzen der Formel A

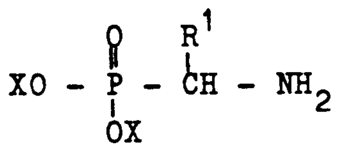 (A)

worin $R^1$ H, $CH_3$ oder $CH_2$-$C_6H_5$ und X H oder ein Metallkation ist,
dadurch gekennzeichnet, daß man Verbindungen der Formel B

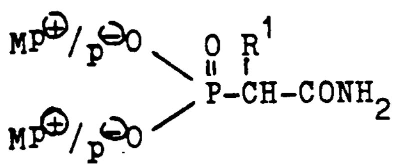 (B)

worin $R^1$ die gleiche Bedeutung wie in Formel A besitzt und $M^{p\oplus}$ Wasserstoff oder ein p-wertiges Metallkation bedeutet, mit einem Hypochlorit eines p-wertigen Metallkations - behandelt, wobei, wenn $M^{p\oplus}$ Wasserstoff ist, für eine ausreichende Basizität Sorge getragen wird,und das gebildete Metallsalz isoliert oder das erhaltene Reaktionsgemisch zur Herstellung der α-Aminoalkylphosphonsäure ansäuert.

2. Verfahren zur Herstellung von α-Aminoalkylphosphonsäuren bzw. deren Salzen der Formel A'

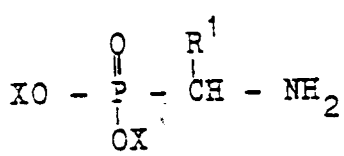 (A')

worin $R^1$ H → oder $CH_2$-$C_6H_5$ und X H oder ein Metallkation ist, dadurch gekennzeichnet, daß man Verbindungen der Formel B'

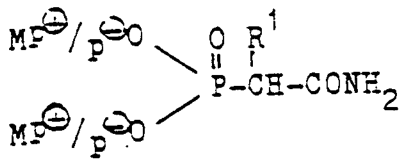

(B')

worin $R^1$ die gleiche Bedeutung wie in Formel A' besitzt und $M^{p\oplus}$ Wasserstoff oder ein p-wertiges Metallkation bedeutet, mit einem Hypobromit eines p-wertigen Metallkations behandelt, wobei, wenn $M^{p\oplus}$ Wasserstoff ist, für eine ausreichende Basizität Sorge getragen wird, und das gebildete Metallsalz isoliert oder das erhaltene Reaktionsgemisch zur Herstellung der α-Aminoalkylphosphonsäure ansäuert.

3. Verfahren nach Anspruch 1 oder 2, dadurch gekennzeichnet, daß man die Verbindung B mit Chlor und Alkalilauge oder die Verbindung B' mit Brom und Alkalilauge umsetzt.

4. Verfahren nach einem oder mehreren der Ansprüche 1 bis 3, dadurch gekennzeichnet, daß man die Umsetzung bei Temperaturen zwischen etwa 20 und 90, vorzugsweise zwischen etwa 40 und 80 und insbesondere zwischen etwa 60 und 75 ° C durchführt.

5. Verfahren nach Anspruch 3 oder 4, dadurch gekennzeichnet, daß das Molverhältnis Halogen zu Alkalihydroxid zu Verbindung B bei etwa (1 - 1,2) zu etwa (4 - 6) zu etwa 1 liegt.

6. Verfahren nach einem oder mehreren der Ansprüche 1 bis 5, dadurch gekennzeichnet, daß M Natrium oder Kalium ist.

7. Verfahren nach einem oder mehreren der Ansprüche 1 bis 6, dadurch gekennzeichnet, daß $R^1$ $CH_3$ oder $CH_2$-$C_6H_5$, vorzugsweise aber Wasserstoff ist.

## Claims

1. A process for the preparation of an α-aminoalkylphosphonic acid, or a salt thereof, of the formula A

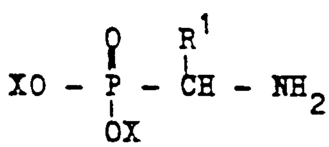

(A)

in which $R^1$ is H, $CH_3$ or $CH_2$-$C_6H_5$ and X is H or a metal cation, which comprises treating a compound of the formula B

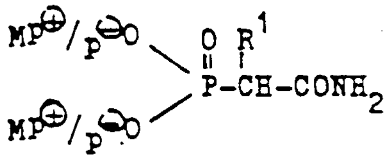

(B)

in which $R^1$ is as defined in formula A, and $M^{p\oplus}$ is hydrogen or a p-valent metal cation, with a hypochlorite of a p-valent metal cation, where, if $M^{p\oplus}$ is hydrogen, adequate basicity is ensured, and isolating the metal salt formed or acidifying the resultant reaction mixture to prepare the α-aminoalkylphosphonic acid.

2. A process for the preparation of an α-aminoalkylphosphonic acid, or a salt thereof, of the formula A'

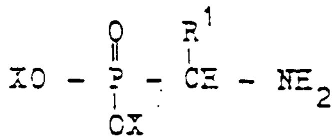

(A')

in which $R^1$ is H, or $CH_2$-$C_6H_5$ and X is H or a metal cation, which comprises treating a compound of the formula B'

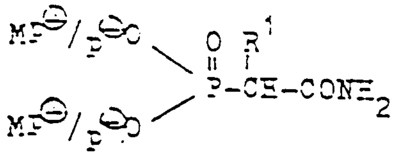

(B')

in which $R^1$ is as defined in formula A', and $M^{p\oplus}$ is hydrogen or a p-valent metal cation, with a hypobromite of a p-valent metal cation, where, if $M^{p\oplus}$ is hydrogen, adequate basicity is ensured, and isolating the metal salt formed or acidifying the resultant reaction mixture to prepare the $\alpha$-aminoalkylphosphonic acid.

3. The process as claimed in claim 1 or 2, wherein the compound B is reacted with chlorine and alkali metal hydroxide solution or the compound B' is reacted with bromine and alkali metal hydroxide solution.

4. The process as claimed in one or more of claims 1 to 3, wherein the reaction is carried out at temperatures between about 20 and 90 °C, preferably between about 40 and 80 °C, in particular between about 60 and 75 °C.

5. The process as claimed in claim 3 or 4, wherein the halogen:alkali metal hydroxide:compound B molar ratio is from about (1-1.2):about (4-6):about 1.

6. The process as claimed in one or more of claims 1 to 5, wherein M is sodium or potassium.

7. The process as claimed in one or more of claims 1 to 6, wherein $R^1$ is $CH_3$ or $CH_2$-$C_6H_5$, but is preferably hydrogen.

**Revendications**

1. Procédé de préparation d'acides $\alpha$-aminoalkylphosphoniques et de sels de ces acides, de Formule A ci-dessous

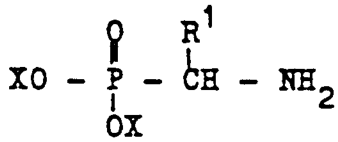

(A)

dans laquelle $R^1$ représente l'hydrogène ou le groupe CH3 ou $CH_2$-$C_6H_5$ et X l'hydrogène ou un cation de métal, procédé caractérisé en ce que l'on traite des composés de Formule B

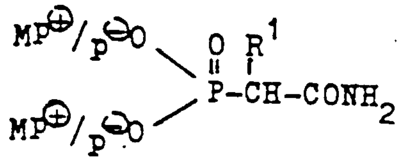

(B)

$R^1$ ayant la même signification que dans la Formule A et $M^{p\oplus}$ désignant l'hydrogène ou un cation de métal de valence p, avec un hypochlorite d'un cation de métal de valence p, et, si $M^{p\oplus}$ est l'hydrogène, on veille à ce qu'il y ait une basicité suffisante, puis on isole le sel de métal formé ou bien on acidifie le mélange de réaction obtenu pour former l 'acide α-aminoalkylphosphonique.

2. Procédé de préparation d'acides α-aminoalkylphosphoniques et de sels de ces acides, de Formule A'.

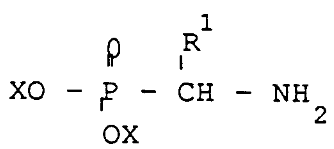

(A')

$R^1$ désignant l'hydrogène ou le groupe $CH_2$-$C_6H_5$ et X l'hydrogène ou un cation de métal, procédé caractérisé en ce que l'on traite des composés de Formule B'

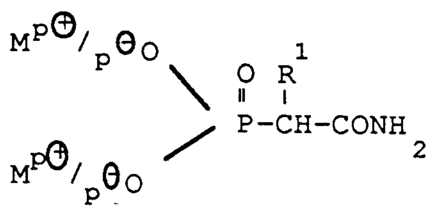

(B')

$R^1$ ayant la même signification que dans la Formule A' et $M^{p\oplus}$ désignant l'hydrogène ou un cation de métal de valence p, avec un hypobromite d'un cation de métal de valence p et, si $M^{p\oplus}$ est l'hydrogène, on veille à ce qu'il y ait une basicité suffisante, puis on isole le sel de métal formé ou bien on acidifie le mélange de réaction obtenu pour former l'acide α-aminoalkylphosphonique.

3. Procédé selon la revendication 1 ou 2, caractérisé en ce que l'on fait réagir le composé B avec du chlore et une lessive d'alcali ou bien le composé B' avec du brome et une lessive d'alcali.

4. Procédé selon une ou plusieurs des revendications 1 à 3, caractérisé en ce que l'on effectue la réaction à des températures d'environ 20 à 90 ° C, de préférence d'environ 40 à 80 ° C et en particulier d'environ 60 à 75 ° C.

5. Procédé selon la revendication 3 ou 4, caractérisé en ce que les proportions molaires halogène : hydroxyde alcalin : composés B sont d'environ (1 - 1,2) : environ (4 - 6) : environ 1.

6. Procédé selon une ou plusieurs des revendications 1 à 5, caractérisé en ce que le symbole M désigne le sodium ou le potassium.

7. Procédé selon ou plusieurs des revendications 1 à 6, caractérisé en ce que $R^1$ est le groupe $CH_3$ ou $CH_2$-$C_6H_5$, mais de préférence l'hydrogène.